# EUROPÄISCHE PATENTSCHRIFT

(11) **EP 4 271 954 B1**
(45) Veröffentlichungstag und Bekanntmachung des Hinweises auf die Patenterteilung: **16.10.2024**
(21) Anmeldenummer: 22713532.4
(22) Anmeldetag: 09.02.2022
(51) Int. Cl.: F27B 7/20, C04B 7/43, F27D 7/02, F27D 13/00

(54) **HÖHENOPTIMIERTE VORRICHTUNG ZUR WÄRMEBEHANDLUNG VON MINERALISCHEN STOFFEN**
HEIGHT-OPTIMIZED DEVICE FOR THE THERMAL TREATMENT OF MINERAL SUBSTANCES
DISPOSITIF À HAUTEUR OPTIMISÉE POUR LE TRAITEMENT THERMIQUE DE SUBSTANCES MINÉRALES

(30) Priorität: 24.02.2021 DE 102021201730; 24.02.2021 BE 202105126
(43) Veröffentlichungstag der Anmeldung: 08.11.2023
(73) Patentinhaber: thyssenkrupp Polysius GmbH, 59269 Beckum (DE); thyssenkrupp AG, 45143 Essen (DE)
(72) Erfinder: HILDEBRANDT, Sven, 59269 Beckum (DE)
(74) Vertreter: thyssenkrupp Intellectual Property GmbH
(86) Internationale Anmeldenummer: PCT/EP2022/053069
(87) Internationale Veröffentlichungsnummer: WO 2022/179847

(56) Entgegenhaltungen:
- WO-A1-2011/029690
- WO-A1-2015/197372
- DE-A1- 10 150 097
- DE-A1- 102012 016 361
- DE-A1- 102012 020 300
- DE-A1- 102013 006 236
- DE-A1- 102013 006 237
- DE-A1- 102014 012 396
- DE-A1- 19 649 922
- DE-A1- 2 523 737

## Beschreibung

Die Erfindung betrifft eine Vorrichtung zur Wärmebehandlung von feinkörniger mineralischen Stoffen, beispielsweise mineralischer Carbonate, Tone oder metallische Erze.

Solche Vorrichtungen weisen einen Vorwärmer, einen Calcinator und einen Kühler auf. Prinzipiell verlaufen der Stoffstrom des Feststoffes und der Gasstrom im Gegenstrom, wobei üblicherweise abschnittsweise ein Gleichstrom mit dazwischengeschalteten Abscheidern, insbesondere Zyklonabscheidern vorliegt. Während das Gas die Anlage von unten nach oben durchströmt, durchläuft das Aufgabematerial die Anlage mittels Schwerkraft von oben nach unten. Daher werden Vorwärmer, Calcinator und Kühler üblicherweise übereinander angeordnet. Da insbesondere Vorwärmer und Kühler üblicherweise mehrstufig ausgebildet sind, ergibt sich eine hohe Bauhöhe, die der Summe der Höhe der einzelnen Baugruppen beziehungsweise Prozessstufen entspricht. Doch gerade diese Bauhöhe stellt vielerorts durch Erdbebenrisiken, Starkwinde oder örtlichen Vorschriften ein Problem in der Umsetzung dar, was zum Teil eine Nutzung dieser Technologie unmöglich macht.

Als weitere Schwachpunkt der Flugstromtechnologie ist neben der Bauhöhe zudem eine recht kurze Verweilzeit im Calcinator zu nennen. Es ist bekannt, dass durch eine Verlängerung der Prozesszeit, sich die Produkteigenschaften weiter den späteren Anforderungen anpassen lassen. Wird zur Verlängerung der Verweilzeit eine entsprechende Vorrichtung zum Beispiel Verweilbehälter oder Materialrückführungen integriert, erhöht sich die Bauhöhe weiter.

Aus der EP 0 125 973 B1 ist eine Vorrichtung zur thermischen Behandlung von Mineralien in pulveriger Form mit Gasen bekannt.

Aus der US 6,574,885 B1 ist ein Zyklonwärmetauscher bekannt.

Aus der WO 98/55418 A1 ist eine Vorrichtung zur Wärmebehandlung von Pulver bekannt.

Aus der EP 1 060 146 B1 ist eine Ofenanlage und ein Verfahren zur Zementherstellung bekannt.

Aus der DE 10 2013 006236 A1 ist eine Anlage zur Herstellung von Zementklinker mit einem Vergasungsreaktor für schwierige Baustoffe bekannt.

Aus der DE 10 2012 016361 A1 ist eine Anlage zur Herstellung von Zementklinker mit einer Brennvorrichtung für schwierige Brennstoffe bekannt.

Aus der DE 10 2013 006237 A1 ist ein Verfahren zum Betrieb einer Anlage zur Herstellung von Zement bekannt.

Aus der DE 196 49 922 A1 ist ein Verfahren und eine Vorrichtung zur Wärmebehandlung von feinkörnigem Gut bekannt.

Aus der DE 10 2014 012396 A1 ist ein Verfahren und eine Anlage zur Herstellung von Zementklinker mit Entsäuerung in einer Wirbelschichtanlage bekannt.

Aus der DE 10 2012 020300 A1 ist ein Verfahren zur Nutzung der Abwärme einer Anlage zur Herstellung von Zement bekannt.

Aus der WO 2011 / 029690 A1ist ein Verfahren zur Herstellung von Zement mit einer Abtrennung von Kohlendioxid bekannt.

Aus der DE 25 23 737 A1 ist ein Verfahren zum Brennen von Zementklinker und eine Vorrichtung zur Durchführung dieses Verfahrens bekannt.

Aus der DE 101 50 097 A1 ist eine Mehrstrang-Anlage zur Herstellung von Zementklinker aus Rohmehl bekannt.

Aus der WO 2015 / 197372 A1 ist ein Verfahren zur Abwärmenutzung in einer Anlage zur Zementherstellung und eine Anlage zur Zementherstellung bekannt.

Durch die vergleichsweise große Bauhöhe ist aus statischen Gründen der tragende Stahlbau sehr aufwändig und kostenintensiv. Mancherorts ist die Errichtung einer solchen Anlage durch örtlich Höhenlimitierungen oder aufgrund von Gefahren durch Erdbeben oder starken Winden gänzlich undenkbar.

Aufgabe der Erfindung ist es, eine Vorrichtung zu schaffen, die auch unter diesen Randbedingungen realisierbar ist.

Gelöst wird diese Aufgabe durch Vorrichtung mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Vorrichtung dient zur Wärmebehandlung wie beispielsweise und insbesondere Röstung, Kalzination, Dehydratation oder Phasenänderungen, von mineralischen Stoffen, insbesondere feinkörnigen mineralischen Stoffen. Beispielsweise und insbesondere sind die mineralischen Stoffe ausgewählt aus der Gruppe umfassend mineralischer Carbonate, Gips, Kalkstein, Magnesit, Dolomit, Phosphaterz, Tonen, Metallerzen oder einer Mischung hieraus. Die Vorrichtung weist drei Baugruppen auf, wobei eine erste Baugruppe ein Vorwärmer ist, wobei eine zweite Baugruppe ein Calcinator ist und wobei eine dritte Baugruppe ein Kühler ist. Der Vorwärmer ist ein Flugstromvorwärmer, bevorzugt eine Kaskade von Flugstromvorwärmern. Der oder jeder einzelne Flugstromvorwärmer weist einen Gleichstromwärmetauscher auf, in welchem das mineralische Material und das Gas im Gleichstrom geführt werden, wobei das mineralische Material im Gasstrom transportiert wird. Am Ende dieses Gleichstromwärmetauschers ist ein Abscheidezyklon angeordnet. Der Flugstromwärmetauscher oder die Kaskade der Flugstromwärmetauscher wird von Material und Gas im Gegenstrom geströmt. Hierbei läuft das Material von oben nach unten und das Gas von unten nach oben. Der Calcinator ist ein Flugstromcalcinator. Ein Flugstromcalcinator weist eine Energiequelle, beispielsweise einen Brenner auf. In diesem Bereich wird das mineralische Material eingebracht. Im Gasstrom wird das mineralische Material durch den Calcinator getragen. Am Ende des Calcinators ist ein Abscheidezyklon angeordnet. Der Calcinator ist zur Überführung des Materialstroms direkt mit dem Kühler verbunden. Die direkte Verbindung bedeutet insbesondere, dass zwischen dem Calcinator und dem Kühler kein weiterer Ofen, insbesondere kein Drehrohrofen, angeordnet ist. Die vollständige thermische Behandlung unter Zuführung von Energie ist somit innerhalb des Calcinators abgeschlossen. Zwar kann aufgrund der Eigentemperatur des mineralischen Materials eine chemische Umsetzung bis zur vollständigen Abkühlung erfolgen, beispielsweise in einem Verweilbehälter, eine weitere Energiezufuhr wie beispielsweise in einem Drehrohrofen, erfolgt aber nicht mehr.

Die Baugruppen werden üblicherweise übereinander angeordnet, sodass das Material von oben nach unten durch die Vorrichtung gelangt. In einzelnen Abschnitten der Vorrichtung wird das Material vom Gasstrom gegen die Schwerkraft angehoben, doch insgesamt durchläuft das Material getrieben durch die Schwerkraft die Anlage von oben nach unten. Um die hierdurch entstehende große Bauhöhe zu reduzieren werden erfindungsgemäß zwei der drei Baugruppennebeneinander angeordnet. Beispielsweise werden der Calcinator und der Kühler übereinander und somit neben dem Vorwärmer angeordnet. Alternativ und bevorzugt werden der Vorwärmer und der Calcinator übereinander und somit neben dem Kühler angeordnet.

In einer weiteren Ausführungsform der Erfindung werden alle drei Baugruppen nebeneinander angeordnet. Somit Sind sowohl Vorwärmer als auch Calcinator als auch Kühler nebeneinander angeordnet.

Die Anordnung nebeneinander erhöht zwar auf der einen Seite die benötigte Grundfläche, auf der anderen Seite wird jedoch die Höhe reduziert. Bei begrenzten Grundflächen, beispielsweise bei der Erweiterung bestehender Anlagen, kann das Nebeneinanderplatzieren von zwei Baugruppen, beispielsweise des Kühler und des Calcinator, bereits einen Vorteil im Höhenbau aufweisen. Dabei hat sich als vorteilhaft gezeigt, dass in einer Ausführungsform, bei der Kühler und Calcinator nebeneinander angeordnet sind, eine am unteren Ende des Calcinators angeordnete Brennvorrichtung aus einem Brennerraum und wenigstens einem Brenner, der einen vergleichsweise hohen Anteil am Gesamtanlagengewicht aufweist, in einer tieferen Höhe montiert werden kann. Hierdurch kann ein leichterer Stahlbau eingesetzt werden. Zusätzlich wird die Montage als auch die späteren Wartungsarbeiten des Brennerraumes und des Brenners durch die niedrige Anordnung erleichtert. Ebenso kann es vorteilhaft sein, den Vorwärmer neben dem Calcinator anzuordnen. Für Anlagen, bei der die Grundfläche baulich nicht begrenzt ist, zeigt sich bei der Nebeneinanderplatzierung aller drei Baugruppen, dass die Reduktion der Höhe gegenüber der Zunahme der Grundfläche einen positiven Einfluss auf die tragende Stahlkonstruktion hat, und dass hierdurch eine einfachere und günstigere Konstruktion gewählt werden kann.

Ein weiterer Vorteil dieser Bauweise ist, dass zudem eine deutlich verkürzte Montagezeit der Gesamtanlage erzielt werden kann, da hierbei mehrere vorgefertigte Zykloneinheiten der unterschiedlichen Prozessstufen auf einer Bühnenebene verbaut werden können. Zudem können auch die Kraneinheiten für Montage und bei späteren Revisionen deutlich kleiner gewählt werden.

Bei einer Vorrichtung, bei der der Vorwärmer neben dem Calcinator angeordnet ist hat es sich als vorteilhaft herausgestellt, dass der Abwurfpunkt des Calcinator-Produktes nach oben verschoben werden kann, ohne dass sich die absolute Bauhöhe des Vorwärmers über dem Grund entsprechend nach oben verschiebt. Dadurch kann der Abwurfpunkte des Calcinators den weiteren Erfordernissen der Anlagengestaltung optimiert plattziert werden, ohne dass die Gesamtbauhöhe der Vorrichtung vergrößert wird. So kann beispielsweise durch das Verschieben des Abwurfpunktes des Calcinators nach oben weitere Komponenten, beispielsweise Verweilreaktoren oder Materialstromteiler mit Rückführungen in den Calcinator, in den Materialweg zwischen Calcinator und Kühler installiert werden ohne dass sich hierdurch die gesamte Bauhöhe vergrößert.

In einer weiteren Ausführungsform der Erfindung besteht Vorwärmer aus einer Kaskade von drei bis neun Zyklonwärmetauschern.

In einer weiteren Ausführungsform der Erfindung besteht der Kühler aus einer Kaskade von zwei bis sechs, bevorzugt zwei bis vier, Zyklonwärmetauschern.

In einer weiteren Ausführungsform der Erfindung weist der Vorwärmer einen ersten Materialeingang und einen ersten Materialausgang auf. Der erste Materialausgang wird auch Abwurfpunkt des Vorwärmers genannt. Weiter weist der Calcinator einen zweiten Materialeingang und einen zweiten Materialausgang auf. Der zweite Materialausgang wird auch Abwurfpunkt des Calcinators genannt. Weiter weist der Kühler einen dritten Materialeingang und einen dritten Materialausgang auf. Der dritte Materialausgang wird auch Abwurfpunkt des Kühlers genannt. Vorteilhafter Weise ist der erste Materialausgang oberhalb der zweiten Materialeingangs angeordnet und der zweite Materialausgang ist oberhalb des dritten Materialeingangs angeordnet. Auf diese Weise wird eine geringe Bauhöhe erreicht, gleichzeitig aber auch eine Förderung von Material gegen die Schwerkraft verhindert.

Erfindungsgemäß weist der Vorwärmer einen ersten Gaseingang und einen ersten Gasausgang auf. Weiter weist der Calcinator einen zweiten Gaseingang und einen zweiten Gasausgang auf. Weiter weist der Kühler einen dritten Gaseingang und einen dritten Gasausgang auf. Vorteilhafter Weise ist der zweite Gasausgang mit dem ersten Gaseingang über eine erste Gasleitung verbunden und der dritte Gasausgang ist mit dem zweiten Gaseingang über eine zweite Gasleitung verbunden. Die erste Gasleitung und die zweite Gasleitung weisen jeweils einen fallenden Gasleitungsteil und an der Unterseite eine untere Umlenkung auf. Der fallende Gasleitungsteil führt zu einer Vergleichmäßigung des Gasstromes. Optional und bevorzugt weisen die erste Gasleitung und die zweite Gasleitung jeweils eine obere Umlenkung auf. Da die Bestandteile nicht mehr wie üblich übereinander angeordnet sind, muss nun das heiße Gas umgelenkt und durch jeweils einen fallenden Gasleitungsteil jeweils auf ein niedrigeres Niveau geführt werden, so dass der Gasstrom in die nachfolgende Baugruppe wieder von unten eintritt. Hierdurch verlängert sich zwar der Weg der Gasführung und es wird gleichzeitig mehr Oberfläche geschaffen, was zu einem Wärmeverlust führt, dieses wird durch die geringere Höhe der Gesamtkonstruktion jedoch kompensiert. Optional können diese verbindenden Gasleitungen als Prozessraum zur Konditionierung der Gasströmung genutzt werden. Beispielsweise kann in die erste Gasleitung zwischen dem Kühler und dem Calcinator weitere Energie durch das Zumischen von Heißgas mittels einer Heißgaszuführung aus anderen Prozessen oder eines Heißgaserzeugers oder aber auch durch direkte Zufuhr von Brennstoffen oder elektrischer Energie erfolgen. Die Strecke der zweiten Gasleitung begünstigt die Durchmischung der Gasströme. In die erste Gasleitung zwischen den Calcinator und den Vorwärme können in einer weiteren Ausführungsform Additive, beispielsweise und insbesondere zur NOₓ-Minimierung, eingebracht werden. Durch die Länge der Gasleitung erhöht sich die Verweilzeit zur Umsetzung zwischen dem Additiv, beispielsweise Ammoniak und NOₓ.

In einer weiteren Ausführungsform der Erfindung ist wenigstens eine untere Umlenkung als U-förmige Umlenkung ausgebildet.

In einer weiteren Ausführungsform der Erfindung ist wenigstens eine untere Umlenkung als eine U-förmige Umlenkung mit einem verjüngenden Verlauf ausgeführt. Hierdurch kommt es zu einem Düseneffekt und einer Beschleunigung des Gases am Ende, was vorteilhaft ist, um die Ablagerungen in der unteren Umlenkung zu verringern.

In einer weiteren Ausführungsform der Erfindung weist die untere Umlenkungen einen Einströmtopf, eine Absetzkammer oder einen Wirbeltopf auf. Die erste Gasleitung beziehungsweise die zweite Gasleitung sind hierbei über die untere Umlenkung seitlich mit dem Einströmtopf, der Absetzkammer oder dem Wirbeltopf verbunden. Bevorzugt weisen der Einströmtopf, die Absetzkammer und der Wirbeltopf einen Materialaustrag zur Entfernung von Ablagerungsstoffen auf.

In einer weiteren Ausführungsform der Erfindung weist die zweite unteren Umlenkung der zweiten Gasleitung eine zweite Entnahme für Feststoff auf. Vorzugsweise wird der hier ausgetragene Feststoff über den dritten Materialeingang des Kühlers wieder aufgegeben. Anderenfalls kann der Feststoff auch direkt ausgetragen werden und je nach Zusammensetzung dem Produkt zugeführt oder verworfen werden.

In einer weiteren Ausführungsform weist die erste untere Umlenkung der ersten Gasleitung eine erste Entnahme für einen Feststoff auf. Vorzugsweise wird der hier ausgetragene Feststoff über den dritten Materialeingang des Kühlers wieder aufgegeben. Anderenfalls kann der Feststoff auch direkt ausgetragen werden und je nach Zusammensetzung dem Produkt zugeführt oder verworfen werden.

In einer weiteren Ausführungsform der Erfindung ist in wenigstens einem fallenden Gasleitungsteil ein Ventilator angeordnet.

In einer weiteren Ausführungsform der Erfindung ist zwischen dem zweiten Materialausgang und dem dritten Materialeingang ein Verweilzeitbehälter angeordnet. Der zweite Materialausgang ist oberhalb des Verweilzeitbehälters angeordnet und der dritte Materialeingang ist unterhalb des Verweilzeitbehälters angeordnet. Der Verweilzeitbehälter dient dazu, das zu behandelnde Temperatur eine gewisse Zeit auf der erhöhten Temperatur zu halten, um weitere Umsetzungen zeitlich zu ermöglichen. Der Verweilzeitbehälter kann bereits ein Rohr mit geringer Neigung sein, kann aber auch beispielsweise entsprechend der DE 10 2019 201 763 A1 ausgeführt sein.

In einer weiteren Ausführungsform der Erfindung ist zwischen dem zweiten Materialaustrag und dem dritten Materialeingang ein Materialstromteiler angeordnet. Der Materialstromteiler weist einen ersten Teilstromausgang und einen zweiten Teilstromausgang auf. Der erste Teilstromausgang ist mit dem dritten Materialeingang verbunden und der zweite Teilstromausgang ist mit dem Calcinator verbunden. Somit wird ein Teil des Materialstromes wieder in den Calcinator zurückgeführt wird. Hierdurch erhöht sich die stochastische Verweilzeit des Materials im Calcinator. Die Zufuhr kann hierbei über den zweiten Materialeingang oder alternativ über einen weiteren optionalen separaten Materialeingang in den Calcinator erfolgen, der sich entsprechend des Temperaturprofiles des Calcinators in einer höheren Position der Steigleitung befinden kann.

In einer weiteren Ausführungsform der Erfindung weist der Calcinator wenigstens einen ansteigenden Calcinator-Abschnitt auf. Optional kann der Calcinator einen fallende Calcinator-Abschnitt aufweisen. Wenn der Calcinator einen fallende Calcinator-Abschnitt aufweist, so ist der fallende Calcinator-Abschnitt kürzer als der ansteigende Calcinator-Abschnitt. Durch den fallenden Calcinator-Abschnitt kann die Höhe des zweiten Materialausgangs optimal an die Erfordernisse der Vorrichtung angepasst werden.

In einer weiteren Ausführungsform der Erfindung sind in der ersten Gasleitung und/oder der zweiten Gasleitung eine Additivzuführung zur Zuführung weiterer Additive zur Konditionierung des Gasstromes angeordnet.

In einer weiteren Ausführungsform der Erfindung ist in der ersten Gasleitung und/oder der zweiten Gasleitung eine Erwärmungsvorrichtung zur Zuführung von thermische Energie angeordnet.

Durch diesen Anordnungen der Baugruppen lassen sich im unteren Bereich des Calcinators unterschiedliche Brennerraumgeometrien beziehungsweise Brennerinstallationen installieren, ohne dabei Einfluss auf die Höhenlage der Einlässe und Auslässe der Material- und Gasströmungen der Vorrichtung zu nehmen.

Nachfolgend ist die erfindungsgemäße Vorrichtung anhand eines in den Zeichnungen dargestellten Ausführungsbeispiels näher erläutert.
- Fig. 1: Ausführungsbeispiel ohne Verweilzeitbehälter
- Fig. 2: Ausführungsbeispiel mit Verweilzeitbehälter
- Fig. 3: detaillierte Darstellung

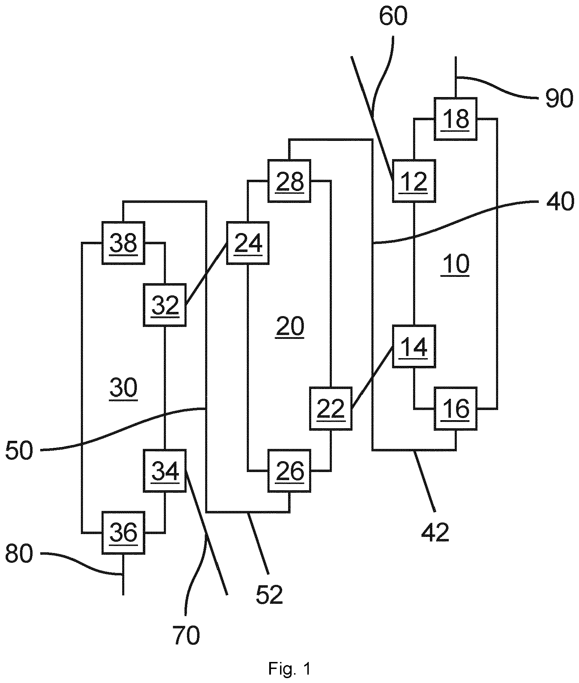

In Fig. 1 ist eine erste erfindungsgemäße Vorrichtung zur Wärmebehandlung schematisch dargestellt. Die Vorrichtung weist einen Vorwärmer 10, einen Calcinator 20 und einen Kühler 30 auf, die nebeneinander angeordnet sind, wodurch zwar mehr Fläche benötigt wird, die Bauhöhe jedoch reduziert werden kann.

Das zu bearbeitende Material tritt durch eine Eduktzuführung 60 in den ersten Materialeingang 12 in den Vorwärmer ein, wird durch den Abgasstrom des Calcinators erwärmt und tritt über einen ersten Materialausgang 14 erwärmt wieder aus. Von hier gelangt das Material in den zweiten Materialeingang 22 des Calcinators 20 und wird hier thermisch umgesetzt. Über einen zweiten Materialausgang 24 verlässt das Material den Calcinator und gelangt über den dritten Materialeingang 32 in den Kühler 30. Hier wird das Material abgekühlt und verlässt den Kühler durch den Materialausgag 34 über die Produktabführung 70.

Der Gasstrom ist im Ganzen betrachtet gegenläufig. Über die Gaszuführung 80 gelangt kühles Gas in den dritten Gaseingang 36 in den Kühler 30 und wird dort durch das Material erwärmt. Durch den dritten Gasausgang 38 verlässt das erwärmte Gas den Kühler 30. Da sich der zweite Gaseinlass 26 des Calcinators 20 durch die nebeneinander liegende Bauweise deutlich niedriger befindet, weist die Vorrichtung eine zweite Gasleitung 50 auf, die am unteren Ende eine zweite untere Umlenkung 52 aufweist.

Üblicherweise befindet sich in direkter Nähe des zweiten Gaseinlasses 26 ein Brennerraum zur Zuführung der notwendigen thermischen Energie. Der hier von unten eintretende vorgewärmter Gasstrom des Kühlers 30 dient als Hauptverbrennungsluft. Das Gas strömt durch den Calcinator 20, welcher beispielsweise und bevorzugt am Ende einen Abscheidezyklon aufweist, um Gas und Material zu trennen. Das Gas wird dann durch den zweiten Gasausgang 28 in die erste Gasleitung 40 geführt, um erneut auf ein tiefer liegendes Niveau des ersten Gaseingangs 16 des Vorwärmers 10 geführt zu werden. Dazu weist die erste Gasleitung ebenfalls am unteren eine erste untere Umlenkung 42 auf. Im Vorwärmer 10 erwärmt das heiße von unten eintretende Gas das kalte von oben eintretende Material und wird selber dabei abgekühlt. Das kühle Gas wird dann durch den ersten Gasausgang 18 zu Gasabführung 90 geleitet. Die Gasabführung 90 kann beispielsweise einen Staubabscheider aufweisen.

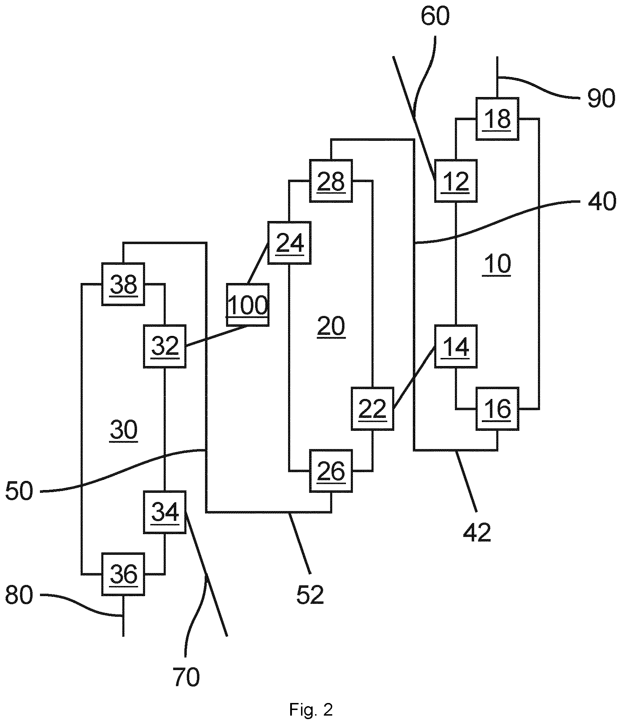

Die in Fig. 2 gezeigte zweite erfindungsgemäße Vorrichtung zur Wärmebehandlung unterscheidet sich von der in Fig. 1 gezeigten ersten erfindungsgemäßen Vorrichtung zur Wärmebehandlung dadurch, dass diese zusätzlich einen Verweilzeitbehälter 100 zwischen dem zweiten Materialausgang 24 und dem dritten Materialeingang 32 aufweist.

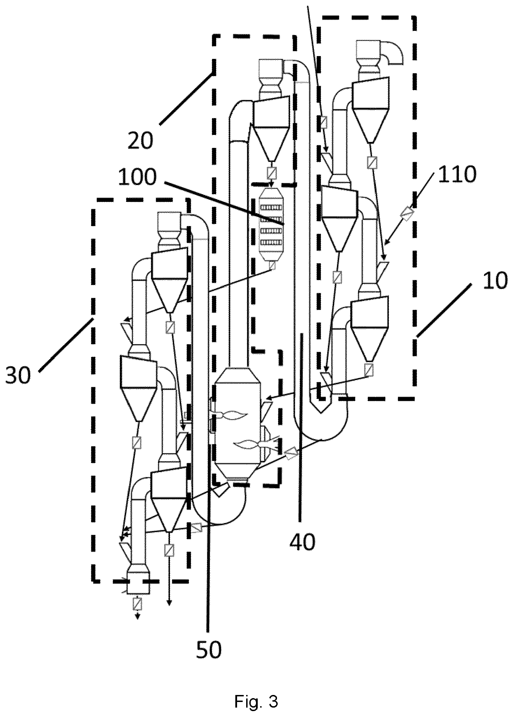

In Fig. 3 ist eine beispielhaftere Ausgestaltung der zweiten erfindungsgemäßen Vorrichtung zur Wärmebehandlung detaillierter dargestellt. Erkennbar ist, dass in der in Fig. 3 gezeigten Ausführungsform sowohl der Vorwärmer 10 als auch der Kühler 30 jeweils durch drei Zyklonstufen gebildet sind, wobei jede Zyklonstufe jeweils eine Steigleitung und einen damit verbunden Zyklonabscheider aufweist sowie eine Materialschurre mit Gasabschlussorgan und Dispersionsorgan. Zusätzlich ist neben der Eduktzuführung 60, eine weiter Materialzuführung 110 beispielsweise zur Rückführung von Filterstäuben dargestellt. Innerhalb der Steigleitungen der einzelnen Zyklonstufen bewegen sich der Materialstrom und der Gasstrom im Gleichstrom, in Summe durchlaufen Gas- und Materialstrom die Vorrichtung dennoch im Gegenstrom. Die einzelnen Baugruppen, Calcinator 20, Vorwärmer 10 und Kühler 30, sind mit Gasleitungen 40, 50 verbunden, wobei der untere Verbindung in der gezeigten Ausführungsform ein U-förmigen untere Umlenkung 42, 52 erfolgt. Die Materialausgänge 14, 24 der einzelnen Baugruppen sind herbei so zu den Materialeingängen 22, 32 verbunden, sodass eine Materialzufuhr mittels Schurren ohne weitere Förderorgane (vertikal oder horizontal) erfolgt. Zudem ist hier eine zusätzlicher Verweilbehälter 100 vorgesehen, um die Zeit des Materials bei Prozesstemperatur zu erhöhen. Vorteil der hier gezeigten Ausführungsform ist, dass durch eine geschickte Höhenorientierung der unteren Umlenkungen 42, 52 die hier austretenden Feststoff-Materialströme wieder dem Kühler 30 zugeführt werden können.

In dieser beispielhaften Ausführungsform sind weiterhin die erfindungsmäßigen Vorzüge ersichtlich, dass bei einer erfindungsgemäßen Vorrichtung gegenüber einer Vorrichtung nach dem Stand der Technik, bei der alle Zyklonstufen übereinander angeordnet sind, die Bauhöhe erheblich reduziert werden kann. Hierdurch kann beispielsweise für die Materialzufuhr 60 zur Vorwärmerstufe ein gegenüber dem Stand der Technik kürzeres Förderorgan verwendet werden. Durch die erfindungsgemäße Anordnung der Baugruppen nebeneinander liegt der Schwerpunkt der einzelnen Baugruppen jeweils auf einem deutlich tieferen Höhenniveau im Vergleich zum Stand der Technik. Eine Modifikation der Anordnung, Baugrößen, Anzahl der Zyklonstufen, Längen der Steigleitungen sowie Einbau weiterer Baugruppen, wie zum Beispiel hier gezeigt eines Verweilbehälter 100, beeinflussen nur die Höhe einer einzelnen Baugruppe, hier des Calcinator, und nicht die Bauhöhe und Gestaltung der anderen beiden Baugruppen

### Bezugszeichen

- 10: Vorwärmer
- 12: erster Materialeingang
- 14: erster Materialausgang
- 16: erster Gaseingang
- 18: erster Gasausgang
- 20: Calcinator
- 22: zweiter Materialeingang
- 24: zweiter Materialausgang
- 26: zweiter Gaseingang
- 28: zweiter Gasausgang
- 30: Kühler
- 32: dritter Materialeingang
- 34: dritter Materialausgang
- 36: dritter Gaseingang
- 38: dritter Gasausgang
- 40: erste Gasleitung
- 42: erste untere Umlenkung
- 50: zweite Gasleitung
- 52: zweite untere Umlenkung
- 60: Eduktzuführung
- 70: Produktabführung
- 80: Gaszuführung
- 90: Gasabführung
- 100: Verweilzeitbehälter
- 110: weitere Materialzuführung

## Patentansprüche

1. Vorrichtung zur Wärmebehandlung von mineralischen Stoffen, wobei die Vorrichtung drei Baugruppen aufweist, wobei die erste Baugruppe ein Vorwärmer (10) ist, wobei die zweite Baugruppe ein Calcinator (20) ist und wobei die dritte Baugruppe ein Kühler (30) ist, wobei der Vorwärmer ein Flugstromvorwärmer ist, wobei der Calcinator ein Flugstromcalcinator ist, wobei der Calcinator (20) direkt mit dem Kühler verbunden ist, **dadurch gekennzeichnet, dass** mindestens zwei der drei Baugruppen nebeneinander angeordnet sind, wobei der Vorwärmer (10) einen ersten Gaseingang (16) und einen ersten Gasausgang (18) aufweist, wobei der Calcinator (20) einen zweiten Gaseingang (26) und einen zweiten Gasausgang (28) aufweist, wobei der Kühler (30) einen dritten Gaseingang (36) und einen dritten Gasausgang (38) aufweist, wobei der zweite Gasausgang (28) mit dem ersten Gaseingang (16) über eine erste Gasleitung (40) verbunden ist, wobei der dritte Gasausgang (38) mit dem zweiten Gaseingang (26) über eine zweite Gasleitung (50) verbunden ist, wobei die erste Gasleitung (40) und die zweite Gasleitung (50) jeweils einen fallenden Gasleitungsteil und an der Unterseite eine untere Umlenkung (42, 52) aufweisen.

2. Vorrichtung nach Anspruch 1, **dadurch gekennzeichnet, dass** die drei Baugruppen nebeneinander angeordnet sind.

3. Vorrichtung nach einem der vorstehenden Ansprüche, **dadurch gekennzeichnet, dass** der Vorwärmer aus einer Kaskade von drei bis acht Zyklonwärmetauschern besteht.

4. Vorrichtung nach einem der vorstehenden Ansprüche, **dadurch gekennzeichnet, dass** der Kühler aus einer Kaskade von zwei bis sechs Zyklonwärmetauschern besteht.

5. Vorrichtung nach einem der vorstehenden Ansprüche, **dadurch gekennzeichnet, dass** der Vorwärmer (10) einen ersten Materialeingang (12) und einen ersten Materialausgang (14) aufweist, wobei der Calcinator (20) einen zweiten Materialeingang (22) und einen zweiten Materialausgang (24) aufweist, wobei der Kühler (30) einen dritten Materialeingang (32) und einen dritten Materialausgang (34) aufweist, wobei der erste Materialausgang (14) oberhalb der zweiten Materialeingangs (22) angeordnet ist, wobei der zweite Materialausgang (24) oberhalb des dritten Materialeingangs (32) angeordnet ist.

6. Vorrichtung nach einem der Ansprüche 1 bis 5, **dadurch gekennzeichnet, dass** wenigstens eine untere Umlenkung (42, 52) als eine U-förmige Umlenkung mit einem verjüngenden Verlauf ausgeführt ist.

7. Vorrichtung nach einem der Ansprüche 1 bis 5, **dadurch gekennzeichnet, dass** die wenigstens eine untere Umlenkung (42, 52) eine Einströmkammer oder eine Absetzkammer unterhalb der nachfolgenden Steigleitung aufweist.

8. Vorrichtung nach einem der Ansprüche 1 bis 5, **dadurch gekennzeichnet, dass** wenigstens eine untere Umlenkung (42, 52) Wirbeltopf unterhalb der nachfolgenden Steigleitung aufweist.

9. Vorrichtung nach einem der vorstehenden Ansprüche, **dadurch gekennzeichnet, dass** die zweite untere Umlenkung (52) der zweiten Gasleitung (50) eine zweite Entnahme für Feststoff aufweist, wobei der der zweiten Entnahme entnommene Feststoff dem Produktstrom, welcher aus dem dritten Materialausgang (34) kommt, zugeführt wird.

10. Vorrichtung nach einem der vorstehenden Ansprüche, **dadurch gekennzeichnet, dass** die erste untere Umlenkung (42) der ersten Gasleitung (40) eine erste Entnahme für Feststoff aufweist, wobei die erste Entnahme oberhalb des dritten Materialeingangs (32) angeordnet ist, wobei der der ersten Entnahme entnommene Feststoff dem dritten Materialeingang (32) zugeführt wird.

11. Vorrichtung nach einem der vorstehenden Ansprüche, **dadurch gekennzeichnet, dass** in wenigstens einem fallenden Gasleitungsteil ein Ventilator angeordnet ist.

12. Vorrichtung nach einem der vorstehenden Ansprüche, **dadurch gekennzeichnet, dass** zwischen dem zweiten Materialausgang (24) und dem dritten Materialeingang (32) ein Verweilzeitbehälter (100) angeordnet ist, wobei der zweite Materialausgang (24) oberhalb des Verweilzeitbehälters (100) angeordnet ist, wobei der dritte Materialeingang (32) unterhalb des Verweilzeitbehälters (100) angeordnet ist.

13. Vorrichtung nach einem der vorstehenden Ansprüche, **dadurch gekennzeichnet, dass** zwischen dem zweiten Materialausgang (24) und dem dritten Materialeingang (32) ein Materialstromteiler angeordnet ist, wobei der Materialstromteiler einen ersten Teilstromausgang und einen zweiten Teilstromausgang aufweist, wobei der erste Teilstromausgang mit dem dritten Materialeingang (32) verbunden ist, wobei der zweite Teilstromausgang mit dem Calcinator (20) verbunden ist.

14. Vorrichtung nach einem der vorstehenden Ansprüche, **dadurch gekennzeichnet, dass** der Calcinator (20) wenigstens einen ansteigenden Calcinator-Abschnitt aufweist, wobei der Calcinator (20) einen fallende Calcinator-Abschnitt aufweisen kann, wobei der fallende Calcinator-Abschnitt kürzer als der ansteigende Calcinator-Abschnitt ist.

15. Vorrichtung nach einem der vorstehenden Ansprüche, **dadurch gekennzeichnet, dass** in der ersten Gasleitung (40) und/oder der zweiten Gasleitung (50) eine Additivzuführung zur Zuführung weiterer Additive zur Konditionierung des Gasstromes angeordnet sind.

16. Vorrichtung nach einem der vorstehenden Ansprüche, **dadurch gekennzeichnet, dass** in der ersten Gasleitung (40) und/oder der zweiten Gasleitung (50) eine Erwärmungsvorrichtung zur Zuführung von thermische Energie angeordnet ist.

## Claims

1. Apparatus for the heat treatment of mineral materials, wherein the apparatus has three assemblies, wherein the first assembly is a preheater (10), wherein the second assembly is a calciner (20) and wherein the third assembly is a cooler (30) , wherein the preheater is an entrained flow preheater, wherein the calciner is an entrained flow calciner, wherein the calciner (20) is directly connected to the cooler, **characterised in that** at least two of the three assemblies are arranged next to each other, wherein the preheater (10) has a first gas inlet (16) and a first gas outlet (18), wherein the calciner (20) has a second gas inlet (26) and a second gas outlet (28), wherein the cooler (30) has a third gas inlet (36) and a third gas outlet (38), wherein the second gas outlet (28) is connected to the first gas inlet (16) via a first gas line (40), wherein the third gas outlet (38) is connected to the second gas inlet (26) via a second gas line (50), wherein the first gas line (40) and the second gas line (50) each have a falling gas line section and a lower deflection (42, 52) on the underside.

2. Device according to claim 1, **characterised in that** the three assemblies are arranged next to each other.

3. Device according to one of the preceding claims, **characterised in that** the preheater consists of a cascade of three to eight cyclone heat exchangers.

4. Device according to one of the preceding claims, **characterised in that** the cooler consists of a cascade of two to six cyclone heat exchangers.

5. Device according to one of the preceding claims, **characterised in that** the preheater (10) has a first material inlet (12) and a first material outlet (14), wherein the calciner (20) has a second material inlet (22) and a second material outlet (24), wherein the cooler (30) has a third material inlet (32) and a third material outlet (34), wherein the first material outlet (14) is arranged above the second material inlet (22), wherein the second material outlet (24) is arranged above the third material inlet (32).

6. Device according to one of claims 1 to 5, **characterised in that** at least one lower deflection (42, 52) is designed as a U-shaped deflection with a tapering course.

7. Device according to one of claims 1 to 5, **characterised in that** the at least one lower deflector (42, 52) has an inflow chamber or a settling chamber below the downstream riser.

8. Device according to one of claims 1 to 5, **characterised in that** at least one lower deflector (42, 52) has a vortex pot below the downstream riser.

9. Device according to one of the preceding claims, **characterised in that** the second lower deflection (52) of the second gas line (50) has a second outlet for solids, the solids removed from the second outlet being fed to the product stream coming from the third material outlet (34).

10. Device according to one of the preceding claims, **characterised in that** the first lower deflection (42) of the first gas line (40) has a first extraction point for solid material, the first extraction point being arranged above the third material inlet (32), the solid material extracted from the first extraction point being fed to the third material inlet (32).

11. Device according to one of the preceding claims, **characterised in that** a fan is arranged in at least one falling gas line section.

12. Device according to one of the preceding claims, **characterised in that** a dwell time container (100) is arranged between the second material outlet (24) and the third material inlet (32), wherein the second material outlet (24) is arranged above the dwell time container (100), wherein the third material inlet (32) is arranged below the dwell time container (100).

13. Device according to one of the preceding claims, **characterised in that** a material flow divider is arranged between the second material output (24) and the third material input (32), wherein the material flow divider has a first partial flow output and a second partial flow output, wherein the first partial flow output is connected to the third material input (32), wherein the second partial flow output is connected to the calciner (20).

14. Device according to one of the preceding claims, **characterised in that** the calciner (20) has at least one ascending calciner section, wherein the calciner (20) can have a descending calciner section, wherein the descending calciner section is shorter than the ascending calciner section.

15. Device according to one of the preceding claims, **characterised in that** an additive supply for supplying further additives for conditioning the gas stream is arranged in the first gas line (40) and/or the second gas line (50).

16. Device according to one of the preceding claims, **characterised in that** a heating device for supplying thermal energy is arranged in the first gas line (40) and/or the second gas line (50).

## Revendications

1. Appareil pour le traitement thermique de matériaux minéraux, dans lequel l'appareil comporte trois ensembles, dans lequel le premier ensemble est un préchauffeur (10), dans lequel le deuxième ensemble est un calcinateur (20) et dans lequel le troisième ensemble est un refroidisseur (30) , dans lequel le préchauffeur est un préchauffeur à flux entraîné, dans lequel le calcinateur est un calcinateur à flux entraîné, dans lequel le calcinateur (20) est directement connecté au refroidisseur, **caractérisé par le fait que** au moins deux des trois ensembles sont disposés l'un à côté de l'autre, dans lequel le préchauffeur (10) a une première entrée de gaz (16) et une première sortie de gaz (18), le calcinateur (20) possède une deuxième entrée de gaz (26) et une deuxième sortie de gaz (28), le refroidisseur (30) possède une troisième entrée de gaz (36) et une troisième sortie de gaz (38), la deuxième sortie de gaz (28) étant reliée à la première entrée de gaz (16) par l'intermédiaire d'une première conduite de gaz (40), la troisième sortie de gaz (38) est reliée à la deuxième entrée de gaz (26) par une deuxième conduite de gaz (50), la première conduite de gaz (40) et la deuxième conduite de gaz (50) ayant chacune une section de conduite de gaz descendante et une déviation inférieure (42, 52) sur la face inférieure.

2. Dispositif selon la revendication 1, **caractérisé par le fait que** les trois assemblages sont disposés les uns à côté des autres.

3. Dispositif selon l'une des revendications précédentes, **caractérisé par le fait que** le préchauffeur est constitué d'une cascade de trois à huit échangeurs de chaleur à cyclone.

4. Dispositif selon l'une des revendications précédentes, **caractérisé par le fait que** le refroidisseur est constitué d'une cascade de deux à six échangeurs de chaleur à cyclone.

5. Dispositif selon l'une des revendications précédentes, **caractérisé par le fait que** le préchauffeur (10) possède une première entrée de matière (12) et une première sortie de matière (14), que le calcinateur (20) possède une deuxième entrée de matière (22) et une deuxième sortie de matière (24), que le refroidisseur (30) possède une troisième entrée de matière (32) et une troisième sortie de matière (34), que la première sortie de matière (14) est disposée au-dessus de la deuxième entrée de matière (22) et que la deuxième sortie de matière (24) est disposée au-dessus de la troisième entrée de matière (32).

6. Dispositif selon l'une des revendications 1 à 5, **caractérisé par le fait qu'**au moins une déviation inférieure (42, 52) est conçue comme une déviation en forme de U avec un parcours effilé.

7. Dispositif selon l'une des revendications 1 à 5, **caractérisé par le fait que** l'au moins un déflecteur inférieur (42, 52) comporte une chambre d'entrée ou une chambre de décantation en dessous de la colonne montante en aval.

8. Dispositif selon l'une des revendications 1 à 5, **caractérisé par le fait qu'**au moins un déflecteur inférieur (42, 52) a un pot de vortex en dessous de la colonne montante en aval.

9. Dispositif selon l'une des revendications précédentes, **caractérisé par le fait que** la deuxième déviation inférieure (52) de la deuxième conduite de gaz (50) possède une deuxième sortie pour les solides, les solides retirés de la deuxième sortie étant introduits dans le flux de produits provenant de la troisième sortie de matériaux (34).

10. Dispositif selon l'une des revendications précédentes, **caractérisé en ce que** la première déviation inférieure (42) de la première conduite de gaz (40) présente un premier point d'extraction de matière solide, le premier point d'extraction étant disposé au-dessus de la troisième entrée de matière (32), la matière solide extraite du premier point d'extraction étant acheminée vers la troisième entrée de matière (32).

11. Dispositif selon l'une des revendications précédentes, **caractérisé par le fait qu'**un ventilateur est disposé dans au moins une section de conduite de gaz tombant.

12. Dispositif selon l'une des revendications précédentes, **caractérisé par le fait qu'**un conteneur de temps de séjour (100) est disposé entre la deuxième sortie de matériau (24) et la troisième entrée de matériau (32), la deuxième sortie de matériau (24) étant disposée au-dessus du conteneur de temps de séjour (100), la troisième entrée de matériau (32) étant disposée au-dessous du conteneur de temps de séjour (100).

13. Dispositif selon l'une des revendications précédentes, **caractérisé par le fait qu'**un diviseur de flux de matières est disposé entre la deuxième sortie de matières (24) et la troisième entrée de matières (32), le diviseur de flux de matières ayant une première sortie de flux partiel et une deuxième sortie de flux partiel, la première sortie de flux partiel étant connectée à la troisième entrée de matières (32), la deuxième sortie de flux partiel étant connectée au calcinateur (20).

14. Dispositif selon l'une des revendications précédentes, **caractérisé par le fait que** le calcinateur (20) comporte au moins une section de calcinateur ascendante, le calcinateur (20) pouvant comporter une section de calcinateur descendante, la section de calcinateur descendante étant plus courte que la section de calcinateur ascendante.

15. Dispositif selon l'une des revendications précédentes, **caractérisé par le fait qu'**une alimentation en additifs pour fournir d'autres additifs pour le conditionnement du flux de gaz est disposée dans la première ligne de gaz (40) et/ou la deuxième ligne de gaz (50).

16. Dispositif selon l'une des revendications précédentes, **caractérisé par le fait qu'**un dispositif de chauffage pour fournir de l'énergie thermique est disposé dans la première ligne de gaz (40) et/ou la deuxième ligne de gaz (50).
